# EUROPEAN PATENT APPLICATION

(11) **EP 4 220 066 A1**
(43) Date of publication of application: **02.08.2023**
(21) Application number: 20955410.4
(22) Date of filing: 27.11.2020
(51) Int. Cl.: F28G 3/16, F28G 15/02, B08B 3/02

(54) **DEVICE FOR CLEANING HEAT EXCHANGE TUBES OF A STEAM GENERATOR OF A NUCLEAR POWER PLANT**

(30) Priority: 23.09.2020 RU 2020131368
(71) Applicant: Joint Stock Company "Rosenergoatom", Moscow 109507 (RU); ATOMENERGOREMONT JOINT-STOCK COMPANY, Moscow, 115432 (RU); LLC "KROK", Belgorodskaya obl., 308007 (RU); Science and Innovations - Nuclear Industry Scientific Development, Private Enterprise, Moscow, 119017 (RU)
(72) Inventor: EVSEENKO, Gennadii Vasilevich, 309670, s. Yutanovka (RU); SHCHETININ, Gennadii Nikolaevich, 660115, g. Krasnoiarsk (RU); ROMANCHUK, Vitalii Borisovich, Moscow, 109369 (RU); SALISHCHEV, Sergei Aleksandrovich, 249034, g. Obninsk (RU)
(74) Representative: Osmans, Voldemars
(86) International application number: PCT/RU2020/000636
(87) International publication number: WO 2022/066035

(57) **Abstract**

The invention relates to cleaning of tube bundle of NPP steam generator. The device for cleaning heat exchange tubes of NPP steam generator comprising a manipulator, which is installed to be moved and fixed in a vertical corridor between bundles of heat exchange tubes; a nozzle that is installed on the manipulator and is in the form of a head of injectors connected to a pipeline for supplying high-pressure water jets; and means for remote control and video monitoring, wherein the manipulator is equipped with a body, which is installed on a guiding mounting frame and is connected to a base; a drive for main rotational movement located on the body; a post which is connected to the body and is in the form of a hollow column; a drive for auxiliary movement which is fixed on the post, an elbow which is connected to the post and is in the form of a tube having a gear rack, and an elbow of actuating units and a coordinate head. The technical result is a shorter cleaning time and more reliable removal of deposits.

## Description

The invention relates to the field of surface cleaning, in particular, it can be used to clean the surface of steam generator tube bundle from lime scale and sludge deposits.

There are known chemical (RF patent No. 2704169) and hydromechanical (RF patent No. 2692748) methods of surface cleaning for heat exchange tubes of NPP steam generators.

Chemical methods of cleaning do not allow achieving the full degree of cleaning of local areas within clogged annular space, in addition, under increased concentration there may be local metal damages of heat exchange tubes.

The device for cleaning heat exchange tubes of nuclear power plant (NPP) steam generator with high-pressure water jets under RF patent No. 2692748 comprising a manipulator configured to be moved and fixed in a vertical corridor between bundles of heat exchange tubes, a hoist connected to the manipulator and a nozzle installed on the manipulator configured to rotate, provides cleaning of heat exchange tubes, however, due to only a partial rotation of the nozzle, the cleaning efficiency using the known technical solution is reduced, especially when cleaning from scaly deposits tightly adhered to the surface of tubes. Moreover, the control of the known device is quite complicated, especially considering the required accuracy of placement of the manipulator within the annular space. Large dimensions of the manipulator drive are another disadvantage of the known technical solution.

The problem which can be solved by the proposed invention is to improve the cleaning efficiency.

The technical result of the proposed invention involves shorter cleaning time and more reliable removal of deposits.

This technical result is achieved by the fact that the device for cleaning heat exchange tubes of NPP steam generator with high-pressure water jets, comprising a manipulator mounted for movement and fixation in a vertical corridor between bundles of heat exchange tubes, a hoist connected to the manipulator and a nozzle installed on the manipulator configured to rotate, connected to the high-pressure hose, means of remote control and video monitoring, according to the proposed invention, is equipped with a guide mounting frame, a coordinate head, a unit for sludge removal from a steam generator head and auxiliary equipment, wherein the manipulator is equipped with a base installed on the guide mounting frame, a body connected with the base, a drive of the main rotational movement located on the body, a post connected to the body, made in the form of a hollow column, an auxiliary movement drive fixed on the post; an elbow and made in the form of a pipe with a gear rack, an elbow of actuating units and a coordinate head, both elbows connected to the post, and the nozzle is made in the form of a head of injectors connected to a high-pressure hose.

The device for cleaning heat exchange tubes of a steam generator contains heads of injectors that are predominantly configured to rotate so as to direct the high-pressure water jet at an angle of 30° to 150°.

The manipulator body and the post in the device for cleaning steam generator heat exchange tubes can be equipped with limit switches.

The auxiliary equipment in the steam generator heat exchange tube cleaning device consists of a high-pressure pump, associated high-pressure hoses, suction pumps, associated suction nozzles and suction hoses, a receiving tank, intermediate vacuum pumps, filters and a storage tank.

The manipulator of the device for cleaning steam generator heat exchange tubes can be equipped with a pneumatic brake system, and the coordinate head preferably comprises at least one eddy current sensor mounted on a spring suspension.

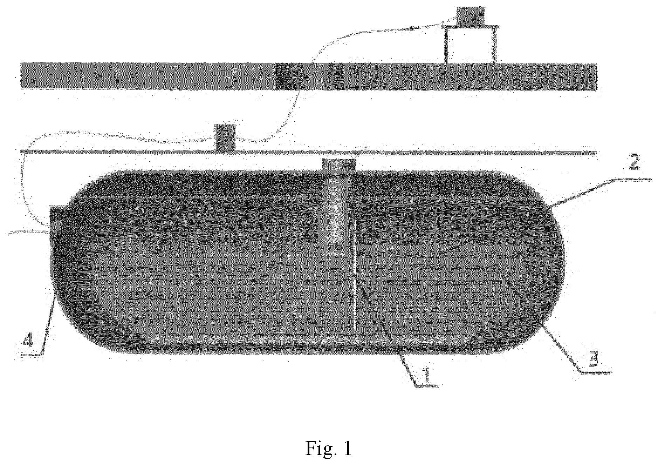

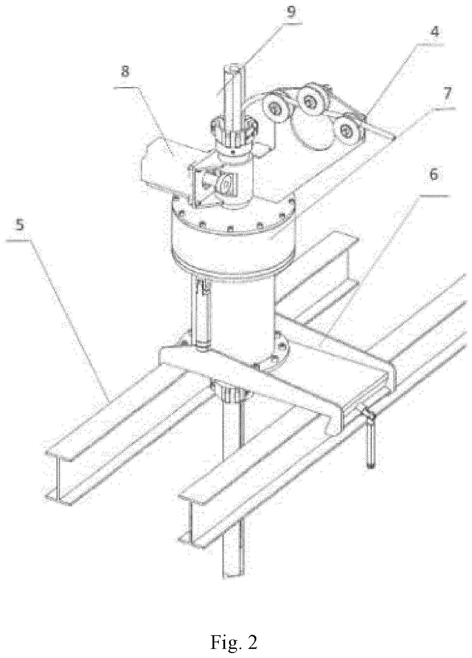

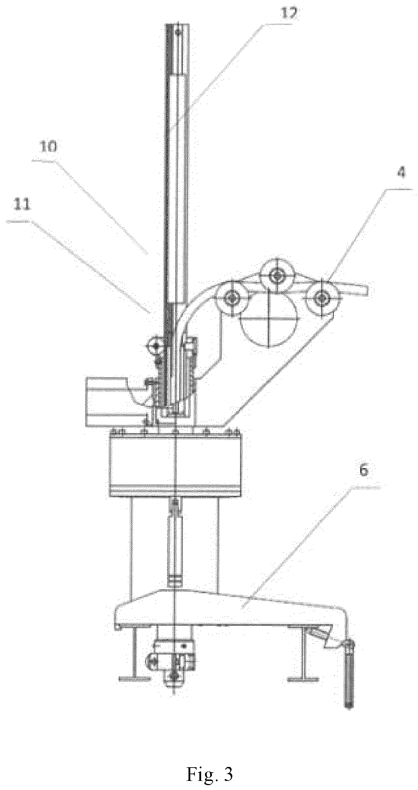

The stated essence of the invention is illustrated by drawings, where Fig. 1 shows a layout of the place of cleaning operations, Fig. 2 shows a general view of the assembled manipulator with the elbow, Fig. 3 shows a general view of the assembled manipulator with the elbow and the elbow of actuating units.

The device for cleaning heat exchange tubes of NPP steam generator with high-pressure water jets comprises a manipulator 1 configured to be moved and fixed in a vertical corridor 2 between bundles of heat exchange tubes 3.

The manipulator 1 is connected to a hoist (not shown in the figure) to enable its delivery and placement inside the steam generator in the work area. To ensure the accuracy of movement of the manipulator 1, the device is equipped with remote control and video monitoring.

High-pressure water jets are supplied through a nozzle (not shown in the figure) mounted on the manipulator 1 and connected to a high-pressure hose 4.

The device is equipped with remote control and video monitoring equipment (not shown in the figure) so that to move the manipulator, assess the state of the metal of steam generator heat exchange tubes, determine the places for cleaning and the process of cleaning of steam generator heat exchange tubes.

The device for cleaning steam generator heat exchange tubes is also equipped with a guide mounting frame 5, a coordinate head, and a unit for sludge removal from the steam generator head, and auxiliary equipment (not shown in the figure).

Wherein, the manipulator 1 is provided with a base 6 mounted on a guide mounting frame 5, a body 7 connected to the base 6.

A main rotational movement drive 8 is located on the body 7. A post 9 made in the form of a hollow column is connected to the body 7. An auxiliary movement drive is fixed on the post 9.

An elbow 10 made in the form of a pipe with a gear rack 11, and an elbow 12 of actuating units and a coordinate head are connected to the post 9.

The nozzle is made in the form of a head of injectors connected to a high-pressure sleeve 4.

The device for cleaning steam generator heat exchange tubes contains heads of injectors that are predominantly configured to rotate so as to direct the high-pressure water jet at an angle of 30° to 150°.

The body 7 and the post 9 of the manipulator 1 in the device for cleaning steam generator heat exchange tubes are predominantly provided with limit switches.

Auxiliary equipment (not shown in the figure) consists of a high-pressure pump, associated high-pressure hoses, suction pumps, associated suction nozzles and suction hoses, a receiving tank, intermediate vacuum pumps, filters and a storage tank.

The manipulator 1 can be equipped with a pneumatic brake system, and the coordinate head predominantly comprises at least one eddy current sensor mounted on a spring suspension.

The device for cleaning heat exchange tubes of NPP steam generator with high-pressure water jets operates as follows.

The device for cleaning steam generator heat exchange tubes is lowered inside the steam generator between the bundles of heat exchange tubes, mounted above one of the selected cells of the steam generator and connected to the high-pressure pump.

The manipulator 1 moves along the guide mounting frame 5, wherein the control and selection of the speed mode of its movement is regulated by a pneumatic brake system.

Water jets under high pressure cover both parts of the tube 3 portions located opposite each other along the corridor of the annular passage. The video monitoring system ensures an accurate placement and alignment of each row of tubes 3 and tube strings.

The manipulator 1 is driven by a servo drive, which includes position and speed sensors and a drive control unit that automatically maintains the necessary parameters on the sensor (and, accordingly, on the manipulator 1) according to the specified external value. When reaching the end point of movement, the manipulator 1 returns to the starting point of the movement or goes down by 5-10 mm (depending on the selected mode). The specified cleaning mode runs automatically until the lowest point of the heat exchange tube bundle 3 is reached.

Cleaning is carried out using the shock effect of a drop flow generated when the high-pressure jet collides with the tube bundle 3. The efficiency of removing deposits is ensured at high pump parameters: a flow rate of 150 1/min at a pressure of 1500 bar, and, as a result, intense impact.

Using the manipulator 1, operations are performed remotely when the manipulator 1 moves step-by-step from the upper row of tubes 3 of the steam generator until all tube 3 segments are covered in directions with different flushing orientations. The cleaning process is possible in different directions of water jet supply from 30° to 150° with the nozzle moving along the vertical corridor of the annular space. The cleaning process is monitored by video surveillance. Depending on the quality of cleaning, the process can be repeated until the desired result is achieved.

Auxiliary process equipment consists of a high-pressure pump, high-pressure hoses, suction connection pipes, suction pumps, suction hoses, a module consisting of a receiving tank, intermediate vacuum pumps, a filter module and a storage tank. The auxiliary process equipment is installed during the preparation of the device for operation.

## Claims

1. A device for cleaning heat exchange tubes of NPP steam generator with high-pressure water jets, comprising a manipulator installed to be moved and fixed in a vertical corridor between bundles of heat exchange tubes, a hoist connected to the manipulator and a nozzle installed on the manipulator configured to rotate, connected to a high-pressure hose, means of remote control and video monitoring, **characterized in that** the device is equipped with a guide mounting frame, a coordinate head, a unit for sludge removal from the head of the steam generator, and auxiliary equipment, wherein the manipulator is equipped with a base installed on a guide mounting frame, a body connected to the base, a drive of main rotational movement located on the body, a post made in the form of a hollow column connected to the body, an auxiliary movement drive fixed on the post, an elbow made in the form of a pipe with a gear rack connected to the post, an elbow of actuating units and a coordinate head, and the nozzle is made in the form of a head of injectors connected to the high-pressure hose.

2. The device according to claim 1, **characterized in that** heads of injectors are configured to rotate so as to ensure the direction of the high-pressure water jet at an angle of 30° to 150°.

3. The device according to claim 1, **characterized in that** the body and the post are equipped with limit switches.

4. The device according to claim 1, **characterized in that** the auxiliary equipment consists of a high-pressure pump, associated high-pressure hoses, suction pumps, associated suction nozzles and suction hoses, a receiving tank, intermediate vacuum pumps, filters and a storage tank.

5. The device according to claim 1, **characterized in that** the manipulator is equipped with a pneumatic brake system.

6. The device according to claim 1, **characterized in that** the coordinate head comprises at least one eddy current sensor mounted on a spring suspension.
